# FASCICULE DE BREVET EUROPEEN

(11) **EP 3 724 962 B1**
(45) Date de publication et mention de la délivrance du brevet: **24.11.2021**
(21) Numéro de dépôt: 18833268.8
(22) Date de dépôt: 06.12.2018
(51) Int. Cl.: H02J 7/00

(54) **BATTERIE À ACCUMULATEURS COMMUTÉS**
BATTERIE MIT GESCHALTETEN AKKUMULATOREN
BATTERY WITH SWITCHED ACCUMULATORS

(30) Priorité: 12.12.2017 FR 1761990
(43) Date de publication de la demande: 21.10.2020
(73) Titulaire: Commissariat à l'Energie Atomique et aux Energies Alternatives, 75015 Paris (FR)
(72) Inventeur: LOPEZ, Yan, 38140 RENAGE (FR); FERNANDEZ, Eric, 38760 SAINT PAUL DE VARCES (FR); BACQUET, Sylvain, 38470 CHASSELAY (FR); CASSARINO, Leandro, 33400 TALENCE (FR); DESPESSE, Ghislain, 38340 VOREPPE (FR); THOMAS, Remy, 38130 ECHIROLLES (FR)
(74) Mandataire: Cabinet Beaumont
(86) Numéro de dépôt international: PCT/FR2018/053144
(87) Numéro de publication internationale: WO 2019/115915

(56) Documents cités:
- EP-A2- 2 584 689
- US-A1- 2005 068 005

## Description

### Domaine

La présente demande concerne le domaine des batteries à accumulateurs commutés.

### Exposé de l'art antérieur

Une batterie à accumulateurs commutés est une batterie comprenant une pluralité de modules généralement identiques connectés en série et/ou en parallèle dont le nombre dépend de la tension voulue aux bornes de la batterie. Chaque module comprend une pluralité d'accumulateurs électriques. Des interrupteurs connectés en série et en parallèle avec les accumulateurs permettent de relier, ou non, en série chaque accumulateur entre des noeuds de sortie du module, de manière à choisir la tension de sortie parmi les différentes combinaisons des tensions fournies par les accumulateurs. Un exemple d'une telle batterie commutée peut être trouvée dans le document EP 2 584 689.

Chaque module de batterie comprend un circuit de commande des interrupteurs. Le circuit de commande est adapté à sélectionner les accumulateurs à relier entre les noeuds de sortie en fonction de divers critères, par exemple la tension de sortie voulue ou le niveau de charge de chaque accumulateur.

Le circuit de commande est alimenté par une tension d'alimentation qui est, de préférence, référencée à la masse du module. Le circuit de commande est donc généralement alimenté par un accumulateur du module connecté à la masse.

Un inconvénient d'une telle batterie est que si l'accumulateur alimentant le circuit de commande est déchargé ou s'il subit une défaillance causant une chute importante de la tension qu'il fournit, le circuit de commande n'est plus alimenté et les accumulateurs ne peuvent plus être commutés.

### Résumé

Ainsi, un objet d'un mode de réalisation est de pallier au moins en partie les inconvénients des batteries à accumulateurs commutés décrites précédemment.

Ainsi, un mode de réalisation prévoit une batterie à accumulateurs commutés comprenant : une première unité ; une pluralité de secondes unités connectées en série avec la première unité, chaque première et seconde unité comprenant : un accumulateur électrique connecté en série, par la cathode, avec un premier interrupteur, un second interrupteur connecté en parallèle avec l'accumulateur et le premier interrupteur, et une première diode, l'anode de la première diode étant reliée à la cathode de l'accumulateur, les cathodes des premières diodes étant connectées à un noeud de sortie, l'anode de l'accumulateur de la première unité étant connectée à la masse, l'anode de la première diode de chaque seconde unité étant reliée à la cathode de l'accumulateur par au moins un troisième interrupteur ; et un circuit de commande adapté à mesurer des caractéristiques d'au moins certains accumulateurs et à commander les premiers, deuxièmes et troisièmes interrupteurs en fonction des caractéristiques.

Selon un mode de réalisation, la cathode de l'accumulateur de chaque seconde unité est reliée à l'anode de la première diode de la seconde unité considérée par autant de troisièmes interrupteurs qu'il y a de première et secondes unités situées entre la seconde unité considérée et la masse.

Selon un mode de réalisation, la cathode de l'accumulateur de la première unité est reliée à l'anode de la première diode correspondante par l'intermédiaire d'un quatrième interrupteur.

Selon un mode de réalisation, chacun des troisièmes interrupteurs a le même état, passant ou bloquant, que l'un des seconds interrupteurs.

Selon un mode de réalisation, les états des troisièmes interrupteurs sont indépendants des états des premiers et seconds interrupteurs.

Selon un mode de réalisation, l'état du premier interrupteur et l'état du second interrupteur de chaque première ou seconde unité sont opposés.

Selon un mode de réalisation, l'anode de l'accumulateur de chaque seconde unité est connectée à la cathode d'une seconde diode, l'anode de ladite seconde diode étant reliée à la masse par une résistance.

Selon un autre mode de réalisation, un procédé d'utilisation d'une batterie telle que décrite précédemment comprend les étapes suivantes : détecter la défaillance d'un accumulateur d'une unité parmi la première unité ou l'une des secondes unités ; rendre passant le second interrupteur de ladite unité et bloquant le premier interrupteur de ladite unité ; et rendre passant au moins un troisième interrupteur d'une autre unité parmi la première unité ou l'une des secondes unités.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, schématiquement, un module d'une batterie à accumulateurs commutés ;
la figure 2 représente, schématiquement et partiellement, un mode de réalisation d'un module d'une batterie à accumulateurs commutés ;
la figure 3 est un chronogramme illustrant le fonctionnement du module de batterie selon le mode de réalisation de la figure 2 ; et
les figures 4 et 5 représentent, schématiquement et partiellement, d'autres modes de réalisation d'un module d'une batterie à accumulateurs commutés.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, les circuits de commande des modules de batterie ne sont pas représentés et leur fonctionnement n'est pas décrit.

Dans la description qui suit, lorsque l'on utilise des qualificatifs tels que les termes "gauche", "droite", etc., il est fait référence à l'orientation des éléments concernés dans les figures.

Sauf précision contraire, l'expression "sensiblement" signifie à 10 % près, de préférence à 5 % près.

Sauf précision contraire, lorsque l'on fait référence à deux éléments connectés entre eux, cela signifie que ces deux éléments sont directement connectés sans élément intermédiaire autre que des conducteurs, et lorsque l'on fait référence à deux éléments reliés ou couplés entre eux, cela signifie que ces deux éléments peuvent être directement reliés (connectés) ou reliés par l'intermédiaire d'un ou plusieurs autres éléments.

Lorsque l'on fait référence à l'état d'un interrupteur ou d'un transistor, on parle de l'état passant ou de l'état bloquant. Lorsque l'on fait référence à la tension d'un point ou d'un noeud, on considère qu'il s'agit de la tension entre le point ou noeud et la masse.

Un mode de réalisation d'un procédé de commande d'un système à cellules commutées va être décrit dans le cas d'une batterie à accumulateurs commutés pour laquelle les cellules correspondent à des accumulateurs commutés. Toutefois, les présents modes de réalisation s'appliquent à tout type de système à cellules commutées adapté à fournir une tension variable à une charge. Chaque cellule du système à cellules commutées peut correspondre à un élément de stockage de charges électriques ou à un générateur électrique. Un exemple d'élément de stockage de charges électriques est par exemple un accumulateur électrique ou un condensateur. Un exemple de générateur électrique est par exemple une pile à combustible, une pile zinc-air, une cellule photovoltaïque ou un système de récupération d'énergie, notamment une mini-éolienne ou une mini-turbine. Le système à cellules commutées peut comprendre seulement des éléments de stockage de charges électriques, seulement des générateurs électriques ou à la fois des éléments de stockage de charges électriques et des générateurs électriques. Lorsque le système à cellules commutées comprend seulement des générateurs électriques, l'utilisation est théoriquement seulement en mode décharge. Néanmoins, en cas de puissance réactive, pour des brefs passages par une puissance négative à chaque période, l'inertie du générateur peut suffire à lisser la puissance, par exemple en raison de l'inertie de rotation et des capacités parasites. En outre, chaque générateur peut être connecté en parallèle d'un élément résistif, afin d'accepter des puissances négatives, en dissipant cette énergie. En fonctionnement, le système est destiné à être relié à un dispositif qui absorbe ou fournit de la puissance selon l'application envisagée. A titre d'exemple, ce dispositif correspond à une machine électrique, par exemple à un moteur électrique, ou au réseau de distribution électrique.

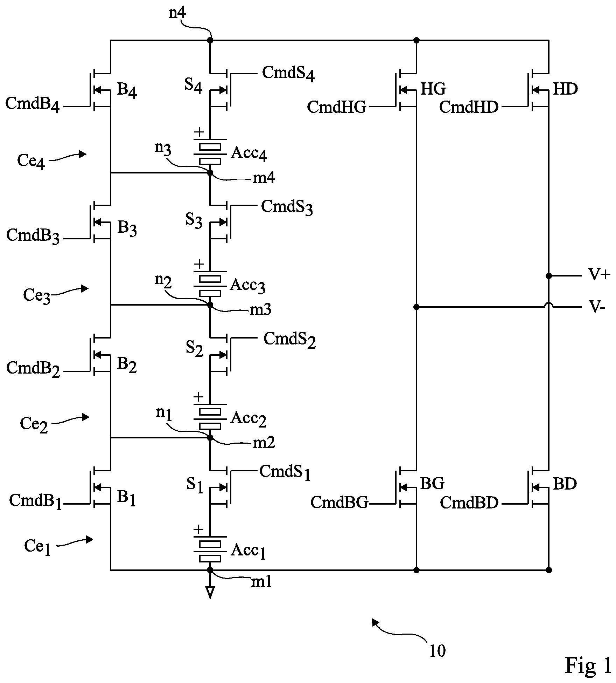

La figure 1 représente schématiquement un module 10 de batterie à accumulateurs commutés. De manière générale, chaque module d'une telle batterie comprend N unités Ceᵢ, N étant un nombre entier et i variant de 1 à N. Dans l'exemple de la figure 1, N est égal à 4.

Chaque unité Ceᵢ comprend des noeuds mᵢ et nᵢ. Le noeud nᵢ de l'unité Ceᵢ est connecté au noeud mᵢ de l'unité Ceᵢ₊₁, pour i variant de 1 à N-1. Le noeud m₁ de l'unité Ce₁ est connecté à la masse. Chaque unité Ceᵢ comprend un accumulateur Accᵢ connecté en série par la cathode avec un transistor Sᵢ entre les noeuds mᵢ et nᵢ, l'anode de l'accumulateur Ceᵢ étant connectée au noeud mᵢ. L'anode de l'accumulateur Acc₁ est donc connectée au noeud m₁ et à la masse. Chaque unité comprend aussi un transistor Bᵢ connecté entre les noeuds mᵢ et nᵢ, en parallèle avec l'ensemble comprenant l'accumulateur Accᵢ et le transistor Sᵢ. Les transistors Sᵢ et Bᵢ ont fonction d'interrupteurs et sont commandés respectivement par des signaux de commande CmdSᵢ et CmdBᵢ. Dans le présent mode de réalisation, les transistors Si et Bi sont des transistors MOS à canal N.

Le noeud n_{N}, ici n₄, est relié à un noeud de sortie V-du module 10 par un transistor HG, commandé par un signal de commande CmdHG. Le noeud n_{N} est relié à un noeud de sortie V+ du module 10 par un transistor HD, commandé par un signal de commande CmdHD. Le noeud m₁ est relié au noeud de sortie V- du module 10 par un transistor BG, commandé par un signal de commande CmdBG. Le noeud m₁ est relié au noeud de sortie V+ du module 10 par un transistor BD, commandé par un signal de commande CmdBD. Dans le présent mode de réalisation, les transistors HD, HG, BD et BG sont des transistors MOS à canal N.

Les signaux de commande sont fournis par un circuit de commande, non représenté. Le circuit de commande peut correspondre à un circuit dédié et/ou peut comprendre un processeur, par exemple un microprocesseur ou un microcontrôleur, adapté à exécuter des instructions d'un programme d'ordinateur stocké dans une mémoire. Pour l'unité Ceᵢ, i variant de 1 à N, les signaux de commande CmdSᵢ et CmdBᵢ sont tels que lorsque le transistor Sᵢ est passant, le transistor Bᵢ est bloquant et inversement. Ainsi, la tension entre le noeud mᵢ et le noeud nᵢ est soit nulle, si B₁ est passant, soit sensiblement égale à la tension fournie par l'accumulateur Accᵢ si le transistor Sᵢ est passant. La tension entre les noeuds m₁ et n_{N} est donc sensiblement égale à une combinaison des tensions fournies par les différents accumulateurs Accᵢ des unités Ceᵢ.

Les signaux de commande des transistors HG, HD, BG et BD sont fournis par le circuit de commande. Les transistors HG, HD, BG, BD peuvent avoir diverses configurations dont deux principales. Dans une première configuration principale, les transistors HD et BG sont passants et les transistors HG et BD sont bloquants. Ainsi, la tension au noeud de sortie V+ est sensiblement égale à la tension du noeud n_{N} et la tension au noeud de sortie V- est sensiblement égale à la tension du noeud m₁. Dans une seconde configuration principale, les transistors HD et BG sont bloquants et les transistors HG et BD sont passants. Ainsi, la tension au noeud de sortie V- est sensiblement égale à la tension du noeud n_{N} et la tension au noeud de sortie V+ est sensiblement égale à la tension du noeud m₁. Les deux configurations fournissent des tensions opposées entre les noeuds V+ et V-.

Le module 10 comprend en outre des capteurs, non représentés, adaptés à mesurer au moins une caractéristique d'au moins certains des accumulateurs, de préférence de chaque accumulateur, par exemple la tension fournie par l'accumulateur, son courant ou sa température, et à fournir ces mesures au circuit de commande.

En fonctionnement, si la défaillance de l'un des accumulateurs Accᵢ est détectée, le circuit de commande peut modifier les états des transistors Sᵢ et Bᵢ de manière à ce que l'accumulateur Accᵢ ne soit plus sollicité ou qu'il ne soit sollicité que de certaines manières. Par exemple, un accumulateur déchargé ne pourrait être sollicité que pour une opération de charge.

Le circuit de commande est par exemple alimenté par l'un des accumulateurs du module. La tension d'alimentation du circuit de commande étant, de préférence, référencée à la masse, la tension d'alimentation du circuit de commande peut être fournie par l'accumulateur Acc₁.

Si l'accumulateur Acc₁ subit une défaillance causant une chute importante de la tension fournie au circuit de commande, le circuit de commande ne peut alors plus être alimenté.

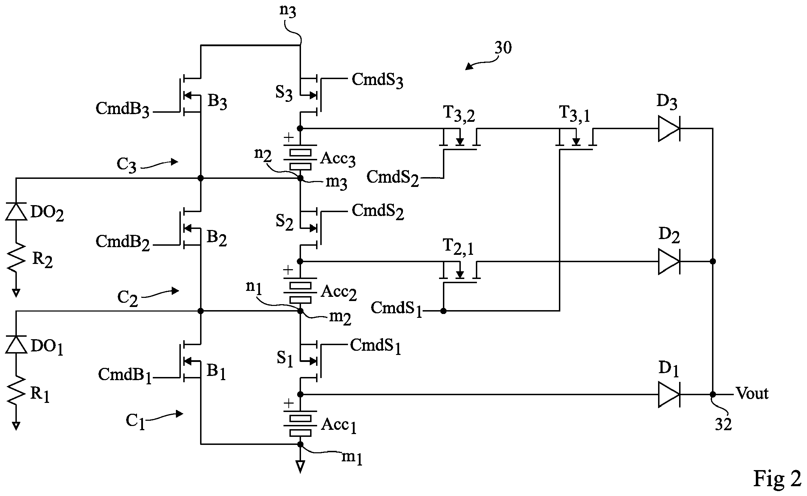

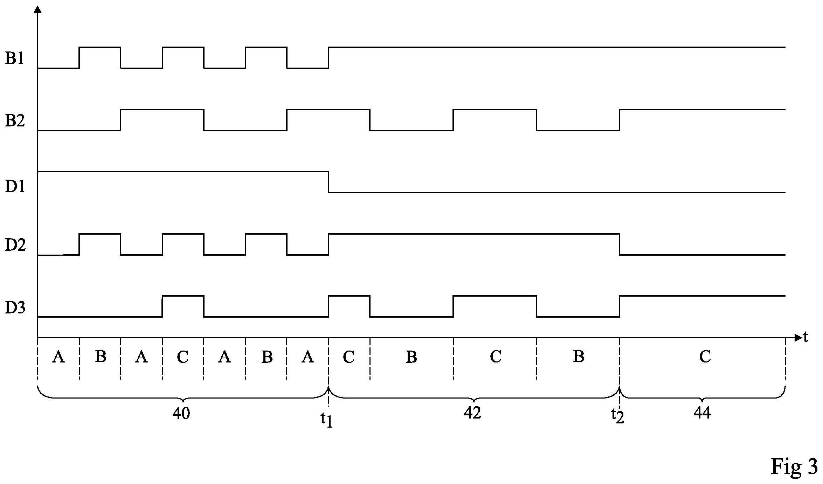

La figure 2 représente schématiquement et partiellement un mode de réalisation d'un module 30 d'une batterie à accumulateurs commutés. La figure 3 représente un chronogramme illustrant le fonctionnement du module de batterie selon le mode de réalisation de la figure 2.

De manière générale, le module comprend N unités Cᵢ, avec N un nombre entier et i variant de 1 à N. En figure 2, N est égal à 3. Chaque unité Cᵢ comprend les éléments des unités Ceᵢ de la figure 1, c'est-à-dire un accumulateur Accᵢ et des transistors Bᵢ et Sᵢ connectés comme cela a été décrit précédemment entre des noeuds mᵢ et nᵢ. Comme précédemment, le noeud m₁ est connecté à la masse et les noeuds m₁ et n_{N}, ici n₃, sont reliés aux noeuds de sortie V+ et V- par les transistors HD, HG, BD et BG qui ne sont pas représentés en figure 2. Le fonctionnement des accumulateurs commutés est similaire au fonctionnement décrit en relation avec la figure 1.

Chaque unité Cᵢ, i variant de 1 à N, comprend en outre une diode Dᵢ. La cathode de l'accumulateur Accᵢ est reliée à l'anode de la diode Dᵢ. La cathode de la diode Dᵢ est connectée à un noeud 32. On appelle Vout la tension du noeud 32. La tension Vout alimente le circuit de commande non représenté.

La cathode de chaque accumulateur Accᵢ, avec i variant de 2 à N, est reliée à l'anode de la diode Dᵢ par i-1 transistors T_{i,j} en série commandés par les signaux de commande CmdSⱼ, avec j variant de 1 à i-1. Par exemple, en figure 2, la cathode de l'accumulateur Acc₃ est reliée à l'anode de la diode D₃ par un transistor T_{3,2} commandé par le signal de commande CmdS₂ et un transistor T_{3,1} commandé par le signal de commande CmdS₁. Les transistors T_{i,j} ont fonction d'interrupteur. Dans le présent mode de réalisation, les transistors T_{i,j} sont des transistors MOS à canal P.

Ainsi, pour une unité Cᵢ donnée, tous les interrupteurs T_{i,j}, j variant de 1 à i-1, connectés entre la cathode de l'accumulateur Accᵢ et la diode Dᵢ sont passants lorsque tous les interrupteurs T_{v,w}, v variant de 1 à i-1 et w variant de 1 à v-1, sont passants.

Les diodes Dᵢ constituent un bloc implémentant la fonction logique OU. Ainsi, la tension Vout au noeud 32, constituant la sortie du bloc, est sensiblement égale à la tension la plus élevée parmi les tensions au niveau des anodes des diodes Dᵢ, constituant les entrées du bloc.

Les signaux de commande sont choisis de telle manière que, pour une unité Cⱼ donnée, lorsque le transistor Sⱼ est dans un premier état, bloquant ou passant, le transistor Bⱼ et les transistors T_{i,j}, avec i pouvant varier de j+1 à N, sont en un deuxième état, passant ou bloquant.

La figure 3 représente un exemple d'évolution en fonction du temps de l'état des transistors B₁ et B₂ et de l'état des diodes D₁, D₂ et D₃. L'état du transistor B₁ ou B₂ est représenté par un signal à un niveau haut lorsque le transistor est passant et par un signal à un niveau bas lorsque le transistor est bloquant. L'état de la diode D₁, D₂ ou D₃ est représenté par un niveau haut lorsque la tension à l'anode de la diode est la tension fournie par l'accumulateur associé et que celle-ci peut être utilisée pour alimenter le circuit de commande. L'état de la diode D₁, D₂ ou D₃ est représenté par un niveau bas lorsque la tension à l'anode de la diode ne peut pas être utilisée pour alimenter le circuit de commande, par exemple parce qu'au moins l'un des interrupteurs entre l'anode de la diode et la cathode de l'accumulateur associé n'est pas passant ou parce que l'accumulateur associé a subi une défaillance.

Les états des transistors S₁, S₂, T_{2,1}, T₃,₁ et T_{3,2} ne sont pas représentés et peuvent être déduits de l'état des transistors B₁ et B₂. Comme décrit précédemment, les transistors S₁, S₂ et S₃ sont commandés de manière à être respectivement dans l'état opposé à l'état des transistors B₁, B₂ et B₃. Les transistors T_{2,1} et T₃,₁ sont commandés de manière à être dans le même état que le transistor B₁. Le transistor T_{3,2} est commandé de manière à être dans le même état que le transistor B₂. Les états des transistors de l'unité C_{N}, ici les transistors B₃ et S₃ de l'unité C₃, n'ont pas d'influence sur l'alimentation du circuit de commande.

Le chronogramme est divisé en trois parties 40, 42 et 44. La partie 40, à gauche, correspond à un fonctionnement normal du module de batterie 30. La partie 42, au centre, débute à un instant t₁ et correspond au fonctionnement lors d'une défaillance de l'accumulateur Acc₁. La partie 44, à droite, débute à un instant t₂ et correspond au fonctionnement lors d'une défaillance de l'accumulateur Acc₂ suivant la défaillance de l'accumulateur Acc₁.

En fonctionnement normal, la tension à l'anode de la diode D₁, c'est-à-dire la tension à une entrée du bloc implémentant la fonction logique OU, est constante et sensiblement égale à la tension fournie par l'accumulateur Acc₁, quel que soit l'état des transistors B₁ et B₂. Ainsi, l'état de la diode D₁ est représenté par un niveau haut en fonctionnement normal. La tension à l'anode de la diode D₂, c'est-à-dire la tension à une autre entrée du bloc implémentant la fonction logique OU, est sensiblement égale à la tension fournie par l'accumulateur Acc₂ lorsque le transistor B₁ est passant, ce qui permet de référencer l'accumulateur Acc₂ à la masse. L'état de la diode D₂ est donc représenté au niveau haut lorsque le transistor B₁ est passant. Lorsque le transistor B₁ est bloquant, la tension à l'anode de la diode D₂ n'est plus la tension fournie par l'accumulateur et l'état de la diode D₂ est représenté par un niveau bas. La tension à l'anode de la diode D₃, c'est-à-dire la tension à une autre entrée du bloc implémentant la fonction logique OU, est sensiblement égale à la tension fournie par l'accumulateur Acc₃ lorsque les transistors B₁ et B₂ sont tous les deux passants. L'état de la diode D₃ alors représenté au niveau haut. Lorsque au moins un des transistors B₁ et B₂ est bloquant, la tension à l'anode de la diode D₃ n'est plus la tension fournie par l'accumulateur Acc₃ et l'état de la diode D₃ est représenté par un niveau bas.

La tension Vout correspond à la tension en sortie du bloc implémentant la fonction logique OU et est donc sensiblement égale à la tension maximale parmi les tensions aux anodes des diodes D₁, D₂ ou D₃.

De manière plus générale, la tension à l'anode d'une diode Dᵢ associée à une unité Cᵢ est sensiblement égale à la tension fournie par l'accumulateur Accᵢ de la même unité lorsque tous les transistors Bⱼ avec j variant de 1 à i-1 sont passants.

Ainsi, en fonctionnement normal, la tension Vout peut avoir trois valeurs différentes :
la tension Vout est sensiblement égale à la tension fournie par l'accumulateur Acc₁, lorsque le transistor B₁ est bloquant, ce qui correspond aux périodes A du chronogramme ;
la tension Vout est sensiblement égale à la valeur maximale entre la tension fournie par l'accumulateur Acc₁ et celle fournie par l'accumulateur Acc₂, lorsque le transistor B₁ est passant et que le transistor B₂ est bloquant, ce qui correspond aux périodes B du chronogramme ; ou
la tension Vout est sensiblement égale à la valeur maximale entre les tensions fournies par les accumulateurs Acc₁, Acc₂ et Acc₃, lorsque les transistors B₁ et B₂ sont passants, ce qui correspond aux périodes C du chronogramme.

A l'instant t₁, l'accumulateur Acc₁ commence à défaillir. Cela est représenté par un passage au niveau bas de l'état de la diode D₁. Cette défaillance est détectée par le circuit de commande grâce aux capteurs non représentés en figure 2. En réponse à cette défaillance, le circuit de commande modifie les signaux de commande de manière à rendre les transistors B₁, T_{2,1} et T_{3,1} passants et le transistor S₁ bloquant. Ainsi, l'anode de l'accumulateur Acc₂ est référencée à la masse et la tension à l'anode de la diode D₂ est sensiblement égale à la tension fournie par l'accumulateur Acc₂.

Le transistor B₁ étant passant, la partie 42 ne comprend que des périodes B et C. La tension à l'anode de la diode D₁ ne pouvant alimenter le circuit de commande après l'instant t₁, en raison par exemple d'une diminution trop importante de la tension fournie par l'accumulateur, on considère que la tension à l'anode de la diode D₁ est inférieure aux tensions aux anodes des diodes D₂ et D₃. Durant les périodes B, la tension Vout a donc la valeur de la tension fournie par l'accumulateur Acc₂ et durant les périodes C, la tension Vout a la valeur maximale entre les valeurs des tensions fournies par les accumulateurs Acc₂ et Acc₃.

A l'instant t₂, l'accumulateur Acc₂ commence à défaillir. Cela est représenté par un passage au niveau bas de l'état de la diode D₂. Cette défaillance est détectée par le circuit de commande grâce aux capteurs. En réponse à cette défaillance, le circuit de commande modifie les signaux de commande de manière à rendre les transistors B₂ et T_{3,2} passants et le transistor S₂ bloquant. Ainsi, l'anode de l'accumulateur Acc₃ est référencée à la masse et la tension à l'anode de la diode D₃ est sensiblement égale à la tension fournie par l'accumulateur Acc₃.

Les transistors B₁ et B₂ étant passants, la partie 44 correspond à une période C durant laquelle la tension Vout a la valeur maximale entre les tensions fournies par les accumulateurs Acc₁, Acc₂ et Acc₃. Comme les accumulateurs Acc₁ et Acc₂ sont défaillants, le circuit de commande est alimenté par l'accumulateur Acc₃.

De façon avantageuse, tant que l'un des accumulateurs n'est pas défaillant, le circuit de commande est alimenté.

Les unités Cᵢ, avec i variant de 1 à N-1, de la figure 2 comprennent, en outre, une diode D0ᵢ, dont la cathode est couplée au noeud nᵢ et dont l'anode est couplée à la masse par l'intermédiaire d'une résistance Rᵢ. Les résistances Rᵢ sont relativement faibles, par exemple comprises entre 1 et 10 ohms. Ces composants permettent d'améliorer le référencement des accumulateurs Accᵢ à la masse durant des périodes durant lesquelles les transistors Bᵢ et Sᵢ ne sont pas pilotés. Ces composants peuvent ne pas être présents. Un avantage du mode de réalisation de la figure 2 est qu'il utilise les mêmes signaux de commande pour la commande des transistors T_{i,j} que ceux déjà utilisés pour la commutation des accumulateurs. En effet, de par la structure du circuit, les valeurs des signaux de commande CmdSᵢ sont dans des gammes adaptés pour simultanément rendre le transistor Sᵢ passant et les transistors T_{j,i}, avec j strictement supérieur à i, bloquants, et inversement. La conception du circuit de commande est donc simplifiée.

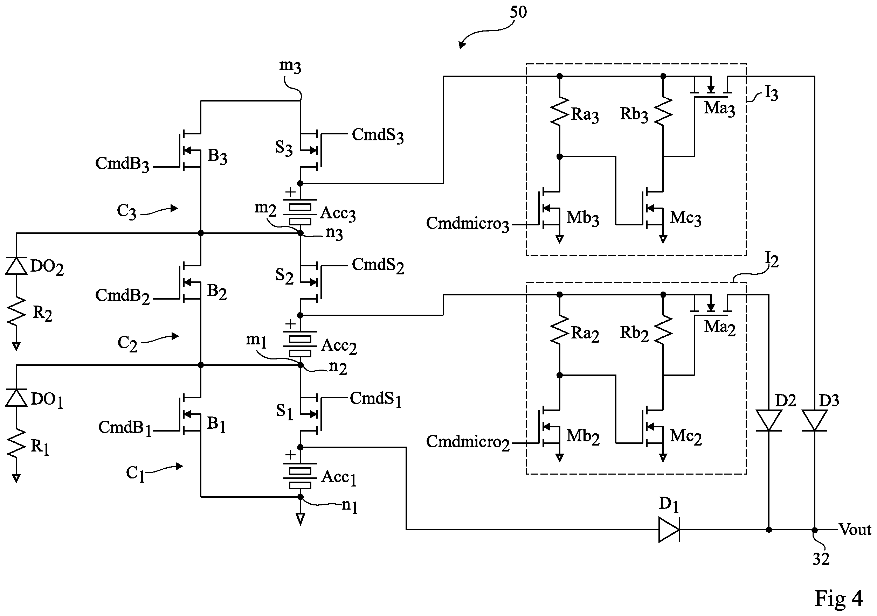

La figure 4 représente, schématiquement et partiellement, un autre mode de réalisation d'un module 50 d'une batterie à accumulateurs commutés comprenant N unités Cᵢ. En figure 4, N est égal à 3. La figure 4 comprend l'ensemble des éléments représentés en figure 2 à la différence que pour une unité Cᵢ donnée, les transistors T_{i,j}, avec j variant de 1 à j-1, sont remplacés par un interrupteur Iᵢ commandé par un signal de commande Cmdmicroᵢ.

Les signaux de commande Cmdmicroᵢ sont fournis par le circuit de commande, non représenté, et peuvent être choisis indépendamment des signaux de commande des transistors Bᵢ et Sᵢ. Lors d'une défaillance de l'accumulateur Acc₁, il est ainsi possible de choisir d'alimenter le circuit de commande par n'importe lequel des autres accumulateurs Accᵢ, avec i variant de 2 à N.

Chaque interrupteur Iᵢ, avec i variant de 2 à N, comprend en figure 4 un transistor Maᵢ connecté entre la cathode de l'accumulateur Accᵢ et l'anode de la diode Dᵢ. La cathode de l'accumulateur Accᵢ est, de plus, reliée à la masse par une résistance Raᵢ en série avec un transistor Mbᵢ commandé par le signal de commande Cmdmicroᵢ. La cathode de l'accumulateur Accᵢ est aussi reliée à la masse par une résistance Rbᵢ en série avec un transistor Mcᵢ commandé par le noeud de connexion entre la résistance Raᵢ et le transistor Mbᵢ. Le transistor Maᵢ est commandé par le noeud de connexion entre la résistance Rbᵢ et le transistor Mcᵢ.

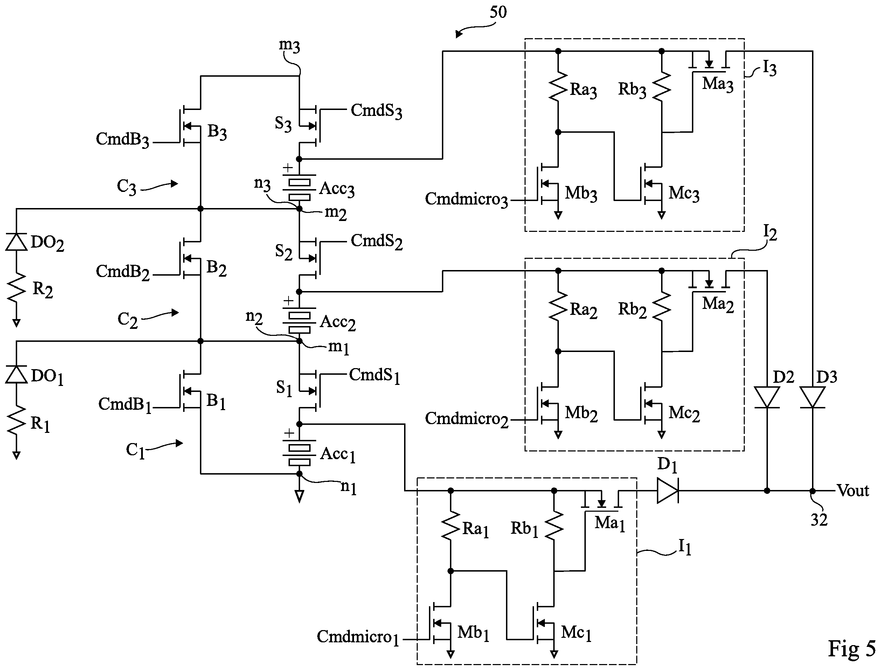

La figure 5 représente une variante du mode de réalisation de la figure 4 dans laquelle la cathode de l'accumulateur Acc₁ est reliée à l'anode de la diode D₁ par un interrupteur I₁ ayant une structure similaire à celle des interrupteurs Iᵢ décrits précédemment.

Dans les présents modes de réalisation, les transistors Maᵢ, Mbᵢ et Mcᵢ, pour i variant de 1 à N, sont par exemple des transistors MOS.

Les interrupteurs Iᵢ décrits ici sont des exemples d'implémentation d'interrupteurs pouvant être remplacés par d'autres implémentations d'interrupteurs.

Un avantage du mode de réalisation de la figure 5 est qu'il est possible de choisir, à tout moment, quel accumulateur alimente le circuit de commande.

Un autre avantage du mode de réalisation des figures 4 et 5 est que la tension Vout ne varie pas selon les commutations des accumulateurs. En effet, les tensions présentes en entrée du bloc implémentant la fonction logique OU ne dépendent que des signaux de commande Cmdmicroᵢ, et non de l'état des transistors Bᵢ et Sᵢ.

Un avantage de ces modes de réalisation est qu'ils ne nécessitent que quelques composants élémentaires pour être implémentés et sont donc relativement peu coûteux.

Des modes de réalisation particuliers ont été décrits. Diverses variantes et modifications apparaîtront à l'homme de l'art. En particulier, les transistors constituant les interrupteurs dans des unités peuvent être remplacés par d'autres types d'interrupteurs selon les besoins du circuit.

Divers modes de réalisation avec diverses variantes ont été décrits ci-dessus. On notera que l'homme de l'art pourra combiner divers éléments de ces divers modes de réalisation et variantes sans faire preuve d'activité inventive.

## Revendications

1. Système électrique à cellules commutées comprenant :
une première unité (C₁) ;
une pluralité de secondes unités (C₂, C₃) connectées en série avec la première unité, chaque première et seconde unité comprenant :
une cellule électrique (Acc₁, Acc₂, Acc₃) connecté en série, par la cathode, avec un premier interrupteur (S₁, S₂, S₃, S₄),
un second interrupteur (B₁, B₂, B₃, B₄) connecté en parallèle avec la cellule et le premier interrupteur, et
une première diode (D₁, D₂, D₃), l'anode de la première diode étant reliée à la cathode de la cellule,
les cathodes des premières diodes étant connectées à un noeud de sortie (32), l'anode de la cellule de la première unité étant connectée à la masse, l'anode de la première diode de chaque seconde unité étant reliée à la cathode de la cellule par au moins un troisième interrupteur (T_{2,1}, T_{3,2}, T_{3,1}, I₂, I₃) ; et
un circuit de commande adapté à mesurer des caractéristiques d'au moins certaines cellules et à commander les premiers, deuxièmes et troisièmes interrupteurs en fonction des caractéristiques.

2. Système électrique à cellules commutées selon la revendication 1, dans lequel la cathode de la cellule de chaque seconde unité (C₂, C₃) est reliée à l'anode de la première diode (D₂, D₃) de la seconde unité considérée par autant de troisièmes interrupteurs (T_{2,1}, T_{3,2}, T_{3,1}, I₂, I₃) qu'il y a de première et secondes unités situées entre la seconde unité considérée et la masse.

3. Système électrique à cellules commutées selon la revendication 1 ou 2, dans lequel la cathode de la cellule de la première unité (C₁) est reliée à l'anode de la première diode (D₁) correspondante par l'intermédiaire d'un quatrième interrupteur (I₁).

4. Système électrique à cellules commutées selon l'une quelconque des revendications 1 à 2, dans lequel chacun des troisièmes interrupteurs (T_{2,1}, T_{3,2}, T₃,₁) a le même état, passant ou bloquant, que l'un des seconds interrupteurs.

5. Système électrique à cellules commutées selon l'une quelconque des revendications 1 à 3, dans lequel les états des troisièmes interrupteurs (I₁, I₂, I₃) sont indépendants des états des premiers (S₁, S₂, S₃, S₄) et seconds (B₁, B₂, B₃, B₄) interrupteurs.

6. Système électrique à cellules commutées selon l'une quelconque des revendications 1 à 5, dans lequel l'état du premier (S₁, S₂, S₃, S₄) interrupteur et l'état du second interrupteur (B₁, B₂, B₃, B₄) de chaque première (C₁) ou seconde (C₂, C₃) unité sont opposés.

7. Système électrique à cellules commutées selon l'une quelconque des revendications 1 à 6, dans lequel l'anode de la cellule de chaque seconde unité est connectée à la cathode d'une seconde diode (D0₁, D0₂), l'anode de ladite seconde diode étant reliée à la masse par une résistance (R₁, R₂).

8. Procédé d'utilisation d'un système électrique selon l'une quelconque des revendications 1 à 7 comprenant les étapes suivantes :
détecter la défaillance d'une cellule (Acc₁, Acc₂, Acc₃) d'une unité parmi la première unité ou l'une des secondes unités ;
rendre passant le second interrupteur (B₁, B₂, B₃) de ladite unité et bloquant le premier interrupteur (S₁, S₂, S₃) de ladite unité ; et
rendre passant au moins un troisième interrupteur (T_{2,1}, T_{3,1}, T_{3,2}, I₁, I₂, I₃) d'une autre unité parmi la première unité ou l'une des secondes unités.

## Patentansprüche

1. Ein elektrisches System mit geschalteten Zellen, wobei das System Folgendes aufweist:
eine erste Einheit (C₁);
eine Vielzahl von zweiten Einheiten (C₂, C₃), die mit der ersten Einheit in Reihe geschaltet sind, wobei jede erste und zweite Einheit Folgendes aufweist:
eine elektrische Zelle (Acc₁, Acc₂, Acc₃), die über die Kathode mit einem ersten Schalter (S₁, S₂, S₃, S₄) in Reihe geschaltet ist,
einen zweiten Schalter (B₁, B₂, B₃, B₄), der parallel zu der Zelle und dem ersten Schalter geschaltet ist, und
eine erste Diode (D₁, D₂, D₃), wobei die Anode der ersten Diode mit der Kathode der Zelle verbunden ist,
wobei die Kathoden der ersten Dioden mit einem Ausgangsknoten (32) verbunden sind, wobei die Anode der Zelle der ersten Einheit mit Masse verbunden ist, und wobei die Anode der ersten Diode jeder zweiten Einheit mit der Kathode der Zelle durch mindestens einen dritten Schalter (T_{2,1}, T_{3,2}, T_{3,1}, I₂, I₃) verbunden ist; und
eine Steuerschaltung, die in der Lage ist, die Eigenschaften mindestens bestimmter Zellen zu messen und den ersten, zweiten und dritten Schalter in Abhängigkeit von den Eigenschaften zu steuern.

2. Elektrisches System mit geschalteten Zellen nach Anspruch 1, wobei die Kathode der Zelle jeder zweiten Einheit (C₂, C₃) mit der Anode der ersten Diode (D₂, D₃) der zweiten betrachteten Einheit durch so viele dritte Schalter (T_{2,1}, T_{3,2}, T_{3,1}, I₂, I₃) gekoppelt ist, wie es erste und zweite Einheiten gibt, die zwischen der zweiten betrachteten Einheit und der Masse liegen.

3. Elektrisches System mit geschalteten Zellen nach Anspruch 1 oder 2, wobei die Kathode der Zelle der ersten Einheit (C₁) mit der Anode der ersten entsprechenden Diode (D₁) über einen vierten Schalter (I1) verbunden ist.

4. Elektrisches System mit geschalteten Zellen nach einem der Ansprüche 1 bis 2, wobei jeder der dritten Schalter (T_{2,1}, T_{3,2}, T_{3,1}) den gleichen Zustand, ein oder aus, hat wie einer der zweiten Schalter.

5. Elektrisches System mit geschalteten Zellen nach einem der Ansprüche 1 bis 3, wobei die Zustände der dritten Schalter (I₁, I₂, I₃) unabhängig von den Zuständen der ersten (S₁, S₂, S₃, S₄) und zweiten (B₁, B₂, B₃, B₄) Schalter sind.

6. Elektrisches System mit geschalteten Zellen nach einem der Ansprüche 1 bis 5, wobei der Zustand des ersten Schalters (S₁, S₂, S₃, S₄) und der Zustand des zweiten Schalters (B₁, B₂, B₃, B₄) jeder ersten (C₁) oder zweiten (C₂, C₃) Einheit entgegengesetzt sind.

7. Elektrisches System mit geschalteten Zellen nach einem der Ansprüche 1 bis 6, wobei die Anode der Zelle jeder zweiten Einheit mit der Kathode einer zweiten Diode (D0₁, D0₂) verbunden ist, wobei die Anode der zweiten Diode über einen Widerstand (R₁, R₂) mit Masse verbunden ist.

8. Verfahren zur Verwendung des elektrischen Systems nach einem der Ansprüche 1 bis 7, wobei das Verfahren die folgenden Schritte aufweist:
Erfassen des Ausfalls einer Zelle (Acc₁, Acc₂, Acc₃) einer Einheit, und zwar der ersten Einheit oder einer der zweiten Einheiten;
Einschalten des zweiten Schalters (B₁, B₂, B₃) der genannten Einheit und Ausschalten des ersten Schalters (S₁, S₂, S₃) der genannten Einheit; und
Einschalten mindestens eines dritten Schalters (T_{2,1}, T_{3,1}, T_{3,2}, I₁, I₂, I₃) einer anderen Einheit, und zwar der ersten Einheit oder einer der zweiten Einheiten.

## Claims

1. An electric system with switched cells comprising:
a first unit (C₁);
a plurality of second units (C₂, C₃) series-connected with the first unit, each first and second unit comprising:
an electric cell (Acc₁, Acc₂, Acc₃) series-connected, by the cathode, with a first switch (S₁, S₂, S₃, S₄),
a second switch (B₁, B₂, B₃, B₄) connected in parallel with the cell and the first switch, and
a first diode (D₁, D₂, D₃), the anode of the first diode being coupled to the cathode of the cell,
the cathodes of the first diodes being connected to an output node (32), the anode of the cell of the first unit being connected to ground, the anode of the first diode of each second unit being connected to the cell cathode by at least one third switch (T_{2,1}, T_{3,2}, T_{3,1}, I₂, I₃); and
a control circuit capable of measuring characteristics of at least certain cells and of controlling the first, second, and third switches according to the characteristics.

2. The electric system with switched cells according to claim 1, wherein the cathode of the cell of each second unit (C₂, C₃) is coupled to the anode of the first diode (D₂, D₃) of the second considered unit by as many third switches (T_{2,1}, T_{3,2}, T_{3,1}, I₂, I₃) as there are first and second units located between the second considered unit and the ground.

3. The electric system with switched cells according to claim 1 or 2, wherein the cathode of the cell of the first unit (C₁) is coupled to the anode of the first corresponding diode (D₁) via a fourth switch (I₁).

4. The electric system with switched cells according to any of claims 1 to 2, wherein each of the third switches (T_{2,1}, T_{3,2}, T_{3,1}) has the same state, on or off, as one of the second switches.

5. The electric system with switched cells according to any of claims 1 to 3, wherein the states of the third switches (I₁, I₂, I₃) are independent from the states of the first (S₁, S₂, S₃, S₄) and second (B₁, B₂, B₃, B₄) switches.

6. The electric system with switched cells according to any of claims 1 to 5, wherein the state of the first switch (S₁, S₂, S₃, S₄) and the state of the second switch (B₁, B₂, B₃, B₄) of each first (C₁) or second (C₂, C₃) unit are opposite.

7. The electric system with switched cells according to any of claims 1 to 6, wherein the anode of the cell of each second unit is connected to the cathode of a second diode (D0₁, D0₂), the anode of said second diode being coupled to ground by a resistor (R₁, R₂).

8. A method for using the electric system according to any of claims 1 to 7, comprising the steps of:
detecting the failure of a cell (Acc₁, Acc₂, Acc₃) of a unit among the first unit or one of the second units;
turning on the second switch (B₁, B₂, B₃) of said unit and turning off the first switch (S₁, S₂, S₃) of said unit; and
turning on at least one third switch (T_{2,1}, T_{3,1}, T_{3,2}, I₁, I₂, I₃) of another unit among the first unit or one of the second units.
